# EUROPEAN PATENT APPLICATION

(11) **EP 1 237 310 A2**
(43) Date of publication of application: **04.09.2002**
(21) Application number: 02004248.7
(22) Date of filing: 26.02.2002
(51) Int. Cl.: H04B 17/00, H04Q 7/34

(54) **Base station testing apparatus and method for testing a base station in a CDMA communication system**

(30) Priority: 26.02.2001 JP 2001050343
(71) Applicant: NEC CORPORATION, Tokyo (JP)
(72) Inventor: Yoshida, Katsuya, Nec Saitama, Ltd., Kodama-gun, Saitama (JP)
(74) Representative: VOSSIUS & PARTNER

(57) **Abstract**

In a base testing apparatus for use in testing an active base transceiver station (BTS) in a CDMA system, a plurality of pre-set attenuators are arranged for respective sectors of a service area assigned to the BTS and are included in correspondence to a plurality of sector TRXs of the BTS so as to simulate a softer handover test of the active BTS between a test sector and its adjacent sector. To this end, each of the pre-set attenuators is structured so that at least three kinds of attenuation values, such as 0 dB, -3dB, and -50 dB. can be realized and are selected from one to another under control of a switching controller. With this structure, the pre-set attenuator of a test sector is put into a state of 0 dB while its adjacent pre-set attenuator and the other attenuators are put into a state of - 3 dB and a state of -50dB, respectively. Controlling the attenuation values in the above-mentioned manner is helpful to simulate the softer handover test of the active BTS.

## Description

This invention relates to a base station testing apparatus (may be simply called a base testing apparatus) and a base station testing method each of which is used in a CDMA (Code Division Multiple Access) system, and, in particular, to the base station testing apparatus and the base station testing method which can realize a softer handover test between selected ones of sectors in a service area assigned to a base transceiver station (BTS).

In general, a mobile communication system is structured by a great number of mobile terminals and a plurality of base transceiver stations (BTS) communicable with the mobile terminals through radio channels within service areas assigned to the respective BTS. Such base transceiver stations will be often simply called base stations hereinafter. Furthermore, the mobile communication system has a base station controller (BSC), a mobile radio exchange operable as an upper device, and a public telephone network.

Such a base transceiver station, namely, BTS, has a service area or cell divided into three or six sectors and a plurality of directive antennas each of which has directivity covering each sector. In this event, each directive antenna exhibits no directivity on the rear of each antenna and therefore serves to reliably divide each cell. This makes it possible to repeatedly utilize the same radio wave resources in a plurality of the BTS and therefore to accommodate a great number of subscribers in each BTS. In a CDMA system also, similar base stations have been provided which have a plurality of antennas directed to sectors.

In the meanwhile, it is to be noted that each bas station should be tested in an active or operation state so as to make sure of whether or not the base station in question is operated in a normal state. To this end, a conventional base station testing apparatus has been used to execute an operational test of confirming a normal operation in each base station. Now, the base station testing apparatus may be often referred to as a test transmitter receiver (TTR) hereinafter. Herein, the operational test is carried out by the conventional base station testing apparatus at every one of the sectors. However, no consideration is made in such a conventional base station testing apparatus about testing a handover operation which switches the sectors from one to another as a mobile terminal is moved from one sector to another and which will be called a softer handover operation.

In EP1022872 A2 (will be simply called Reference) corresponding to Japanese Unexamined Patent Publication No.2000-224119, disclosure is made about an apparatus that includes a multi-channel attenuator coupled to a plurality of cell sectors, a field data processor, and a mobile in a lab. The field data processor is operable to convert field test data into time-varying attenuator control values while the multi-channel attenuator is operable to respond to the attenuator control values for each channel. With this structure, the mobile in the lab can observe carrier and interference levels and might serve to test and optimize handoff procedures between cell sectors.

Thus, the apparatus disclosed in Reference is used in the lab and is operable to virtually recreate radio frequency conditions, such as a variable RF loss, of a cellular network from previously generated field test data. In other words, the disclosed apparatus is effective to virtually test the RF loss along forward and reverse attenuation paths before a base station is actually deployed in a cellular network.

From this fact, it is readily understood that no teaching is made at all in Reference about an apparatus and a method of testing an actual or active base station. Therefore, Reference never considers about an actual handover test of the actual or active base station, although bandoff algorithms can be virtually optimized by recreating radio frequency (RF) field conditions in the lab.

At any rate, no description is made in Reference about testing a relationship between the multi-channel attenuator and an active base station having a plurality of active cell sectors. This shows that an actual operational test is never considered in Reference in connection with the softer handover operation that is executed to switch sectors from one to another within a service area in an active base station of the CDMA system.

It is an object of this invention to provide a base transceiver testing apparatus which is used in a CDMA system and which can actually test a softer handover operation of an actual or active base transceiver station (BTS) having a service area divided into a plurality of sectors.

It is another object of this invention to provide a method which can simulate the softer handover operation in the actual base transceiver station.

According to a first aspect of this invention, a base testing apparatus is for use in a CDMA communication system in combination with an active base transceiver station that has a plurality of sector transceivers corresponding to a plurality of sectors in a service area, respectively. The base station testing apparatus has an internal mobile terminal placed therein and comprises first means for individually adjusting degrees of coupling between the internal mobile terminal and each of the transceivers, respectively, and second means, coupled to the first means, for reproducing a softer handover test of the sector transceivers between two adjacent ones of the sectors by controlling the degrees of coupling between the internal mobile terminal and each sector transceiver through the first means.

According to a second aspect of this invention, the degrees of coupling are defined by attenuation values and the first means comprises a plurality of pre-set attenuators which are made to correspond to the transceivers in the BTS and each of which provides at least three attenuation values different from one another.

According to a third aspect of this invention, each of the pre-set attenuators provides, as at least three attenuation values, a first attenuation value, a second attenuation value smaller than the first attenuation value, and a third attenuation value smaller than the second attenuation value.

According to a fourth aspect of this invention, the first attenuation value gives an optimum call connection state between the internal mobile terminal and the sector transceiver of the corresponding sector while the second and the third attenuation values give a call connection start enable state between the internal mobile terminal and the sector transceiver of the corresponding sector and a call disconnection state between the internal mobile terminal and the sector transceiver of the corresponding sector, respectively.

According to a fifth aspect of this invention, the first, the second, and the third attenuation values are equal to 0 dB, -3 dB, and -50 dB, respectively.

According to a sixth aspect of this invention, each of the pre-set attenuators comprises a first attenuator terminal given a switching control signal from the second means, a second attenuator terminal connected to the sector transceiver of the corresponding sector, a third attenuator terminal coupled to the internal mobile terminal, a plurality of attenuator units having attenuation values different from each other, a plurality of switches for selectively connecting the attenuator units between the second and the third attenuator terminals in response to drive signals to provide the first, the second, and the third attenuation values, and a drive control circuit for controlling on/off control of the respective switches in response to the switching control signal sent through the first attenuator terminal.

According to a seventh aspect of this invention, the attenuator units are equal in number to two and provides the attenuation values of -3 dB and - 47 dB, respectively.

According to an eighth aspect of this invention, each of the pre-set attenuators further comprises a plurality of λ/2 strip lines which are connected in common to an intersection point connected to the third attenuation terminal and which are also connected to the switches for selectively connecting the λ/2 strip lines to the second attenuation terminal through the attenuation units selected.

According to a ninth aspect of this invention, the second means comprises setting means for setting a sector number assigned to each sector to indicate a sector and control means for controlling the degrees of coupling in the first means to reproduce the softer handover test so that the degrees of coupling are selected from a first degree of coupling between the internal mobile terminal and the sector transceiver of the indicated sector, a second degree of coupling between the internal mobile terminal and an adjacent sector transceiver of an adjacent sector to the indicated sector, and a third degree of coupling between the internal mobile terminal and the remaining sector transmitters.

According to a tenth aspect of this invention, the second means further reproduces the softer handover test by executing a call connection test between two radio paths between the internal mobile terminal and the indicated sector and between the internal mobile terminal and the adjacent sector.

According to an eleventh aspect of this invention, the radio path between the internal mobile terminal and the indicated sector transceiver is kept at the first attenuation value while the other radio path between the internal mobile terminal and the adjacent sector transceiver is kept at the second attenuation value and the remaining radio paths are kept at the third attenuation value.

According to a twelfth aspect of this invention, the second means further executes another call connection test of the radio path between the internal mobile terminal and the indicated sector transceiver before the call connection test of the two radio paths and a further call connection test of another radio path between the internal mobile path and the adjacent sector transceiver after the call connection test of the two radio paths.

According to a thirteenth aspect of this invention, each of the call connection test of the radio path or the radio paths monitors a power control time interval in consideration of the softer handover operation.

According to a fourteenth aspect of this invention, a method is for use in testing an active base transceiver station (BTS) in a CDMA communication system. The active base transceiver station has a plurality of sector transceivers corresponding to a plurality of sectors in a service area, respectively. The method is executed by the use of an internal mobile terminal and comprises the steps of individually adjusting degrees of coupling between the internal mobile terminal and each of the transceivers, respectively, and reproducing a softer handover test of the sector transceivers between two adjacent ones of the sectors by controlling the degrees of coupling between the internal mobile terminal and each sector transceiver through the first means.

According to a fifteenth aspect of this invention, the degrees of coupling are defined by attenuation values and the adjusting step comprises the step of using a plurality of pre-set attenuators which are made to correspond to the transceivers in the BTS and each of which provides at least three attenuation values different from one another. Each of the pre-set attenuators provides, as at least three attenuation values, a first attenuation value, a second attenuation value smaller than the first attenuation value, and a third attenuation value smaller than the second attenuation value.

According to a sixteenth aspect of this invention, the adjusting step comprises the steps of giving the first attenuation value in an optimum call connection state between the internal mobile terminal and the sector transceiver of the corresponding sector and giving the second and the third attenuation values in a call connection start enable state between the internal mobile terminal and the sector transceiver of the corresponding sector and in a call disconnection state between the internal mobile terminal and the sector transceiver of the corresponding sector, respectively.

According to a seventeenth aspect of this invention, the reproducing step comprises the steps of setting a sector number assigned to each sector to indicate a sector and controlling the degrees of coupling in the first means to reproduce the softer handover test so that the degrees of coupling are selected from a first degree of coupling between the internal mobile terminal and the sector transceiver of the indicated sector, a second degree of coupling between the internal mobile terminal and an adjacent sector transceiver of an adjacent sector to the indicated sector, and a third degree of coupling between the internal mobile terminal and the remaining sector transmitters.

According to an eighteenth aspect of this invention, the degrees of coupling are defined by attenuation values and the first degree of coupling is defined by a first attenuation value while the second degree is defined by a second attenuation value smaller than the first attenuation value and the third degree is defined by a third attenuation value smaller than the second attenuation value.

According to a nineteenth aspect of this invention, the reproducing step comprises the step of executing a call connection test between two radio paths between the internal mobile terminal and the indicated sector and between the internal mobile terminal and the adjacent sector.

According to a twentieth aspect of this invention, the executing step comprises the steps of keeping the radio path between the internal mobile terminal and the indicated sector transceiver at the first attenuation value, keeping the other radio path between the internal mobile terminal and the adjacent sector transceiver at the second attenuation value, and keeping the remaining radio paths at the third attenuation value.

According to a twenty-first aspect of this invention, the reproducing step comprises the steps of executing another call connection test of the radio path between the internal mobile terminal and the indicated sector transceiver before the call connection test of the two radio paths and executing a further call connection test of another radio path between the internal mobile path and the adjacent sector transceiver after the call connection test of the two radio paths.

According to a twenty-second aspect of this invention, each of the call connection test of the radio path or the radio paths monitors a power control time interval in consideration of the softer handover operation.
Fig. 1 shows a block diagram for use in diagrammatically describing a conventional base testing apparatus which is coupled to an active base station;
Fig. 2 shows a block diagram for use in schematically describing a base testing apparatus according to an embodiment of this invention;
Fig. 3 shows a block diagram for use in describing the base testing apparatus illustrated in Fig. 2 in detail;
Fig. 4 shows a circuit diagram for use in describing a pre-set attenuator illustrated in the base testing apparatus illustrated in Fig. 3;
Fig. 5 shows a table for use in describing operation of the pre-set attenuator illustrated in Fig. 4; and
Fig. 6 shows a flow chart for use in describing operation illustrated in Fig. 4.

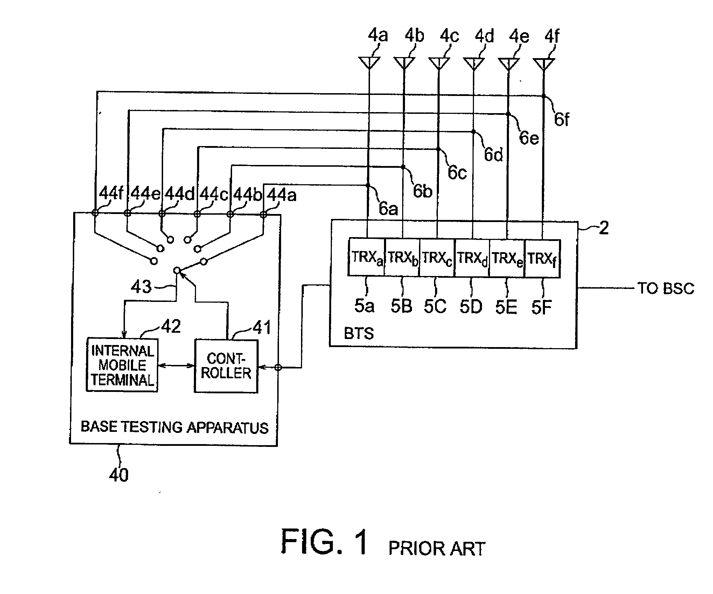

Referring to Fig. 1, description will be made about a conventional base testing apparatus for a better understanding of this invention. The illustrated conventional base testing apparatus 40 is coupled to an active base station 2 which may be called a base transceiver station (BTS) and which is connected to a base station controller (BSC in Fig. 1) (not shown). The conventional base testing apparatus is operable to execute an operational test for confirming whether or not the BTS 2 is normal in operation. It is assumed that the BTS 2 has a service area divided into six sectors. In this connection, the BTS 2 is specified by first through sixth transmitter receivers (TRXa to TRXf) which are connected through feeders to first through sixth sector antennas 4a to 4f, respectively, and which transmit and receive radio signals to and from the respective sector antennas 4a to 4f.

The base testing apparatus 40 is coupled to the first through the sixth sector antennas 4a to 4f through first through sixth couplers 6a to 6f, respectively, and serves to execute the operational test at every sector. The illustrated base testing apparatus 40 has first through sixth antenna input terminals 44a to 44f given transmission and reception signals of the TRXa to TRXf included in the BTS 2 and a sector selection switch 43 selectively connected to the first through the sixth antenna input terminals 44a to 44f.

The sector selection switch 43 is operable in response to a switching signal sent from a controller 41 and serves to switch the sector selection switch 43 to selectively send the transmission and the reception signals of the TRXa to TRXf to an internal mobile terminal 42 under control of the controller 41. With this structure, the transmission and the reception signals are switched at every one of the sectors by the sector selection switch 43 and delivered to the internal mobile terminal 42. In the illustrated example, the controller 41 is supplied from the BTS 2 with a test indication signal.

Specifically, the internal mobile terminal 42 is connected to each of the TRXa to TRXF one by one on testing the BTS 2 and, in this situation, transmission and reception tests are carried out between the base testing apparatus 40 and the BTS 2. Accordingly, the transmission and the reception tests should be repeated six times in order to test the first through the sixth TRXa to TRXf.

With this base testing apparatus 40, it is possible to determine whether or not each TRX assigned to each sector in the BTS 2 is normal. However, it is impossible for the conventional base testing apparatus to test a handover operation executed in the CDMA system to switch the sectors from one to another. Herein, such a handover operation executed in the CDMA system to switch the sectors from one to another will be referred to as a softer handover operation, as mentioned before.

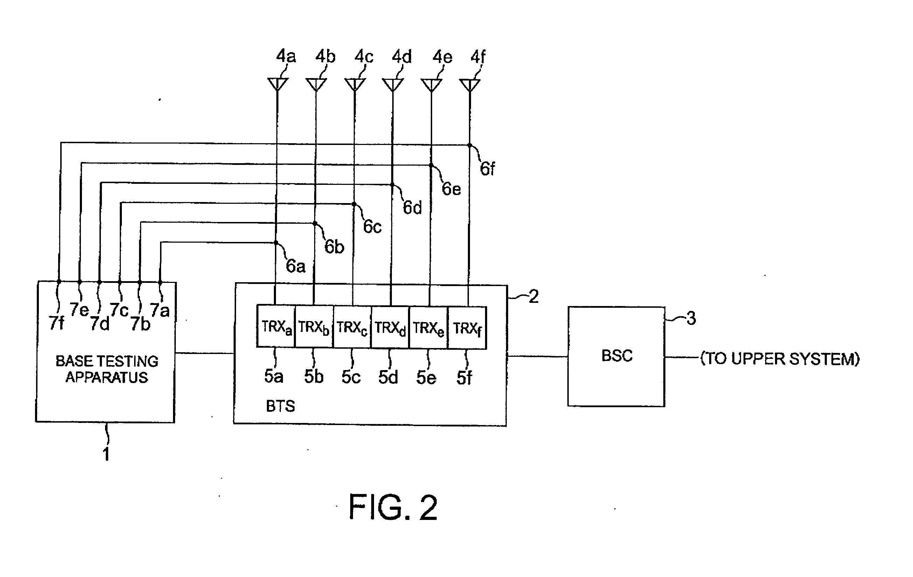

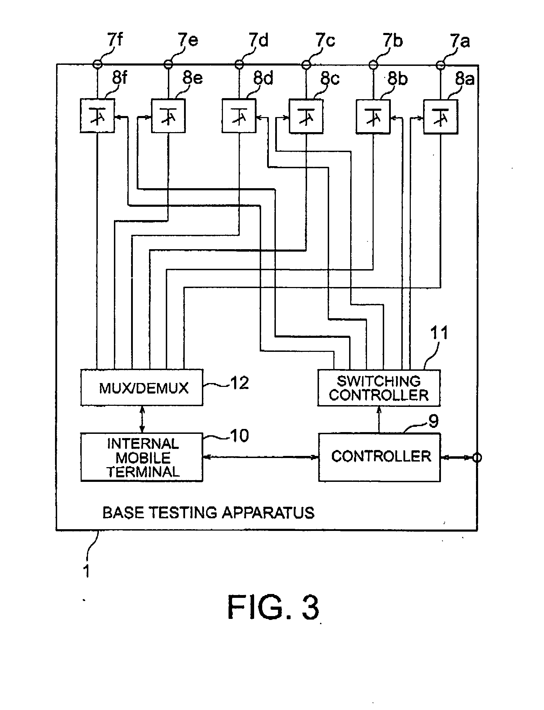

Referring to Figs. 2 and 3, a base testing apparatus 1 according to an embodiment of this invention is connected to a base transceiver station (BTS) 2 in a manner similar to that illustrated in Fig. 1, as shown in Fig. 2. Like in Fig. 1, the BTS 2 is also connected to a base station controller (BSC) 3 coupled to any other upper system, such as a network (not shown). In addition, the illustrated BTS 2 has first through sixth TRXa to TRXf connected through sector antenna feeders to first through sixth sector antennas 4a to 4f, respectively. Between the first through the sixth sector antennas 4a to 4f and the first through the sixth TRXa to TRXf, first through sixth couplers 6a to 6f are placed. The first through the sixth couplers 6a to 6f have input and output terminals that are loosely coupled to the respective sector antenna feeders and that are coupled to the base testing apparatus 1 to supply the same with radio signals used for testing. Such radio signals are transmitted from and received by the base testing apparatus 1.

More specifically, the base testing apparatus 1 illustrated in Fig. 2 has first through sixth antenna input/output terminals 7a to 7f connected to the first through the sixth sector antennas 4a to 4f through the first through the sixth couplers 6a to 6f, respectively. This shows that the base testing apparatus 1 is coupled to the first through the sixth TRXa to TRXf of the BTS 2 via the first through the sixth antenna input/output terminals 7a to 7f. Moreover, the illustrated base testing apparatus is connected to the BTS 2 to transmit/receive various kinds of control information and call information to and from the BTS 2.

Connected through the first through the sixth antenna input/output terminals 7a to 7f as shown in Fig. 3, the base testing apparatus according to this invention has first through sixth pre-set attenuators 8a to 8f, a controller 9, an internal mobile terminal 10, a switching controller 11, and a multiplexer /demultiplexer (abbreviated to MUX/DEMUX) 12. The first through sixth pre-set attenuators 8a to 8f are operable to adjust degrees of coupling between the internal mobile terminal 10 and the first through sixth TRXa to TRXf, respectively, and may be called a first circuit element. The degrees of coupling are defined by attenuation values in the illustrated example.

At first, the controller 9 receives a control signal from the BTS so as to control the base testing apparatus 1 and transmits a response signal from the base testing apparatus 10 to the BTS 2. Responsive to the control signal, the controller 9 controls the switching controller 11 by producing an internal control signal so as to adjust the first through the sixth pre-set attenuators 8a to 8f in a manner to be described later in detail. Responsive to a switching control signal delivered from the switching controller 11, each of the first through the sixth pre-set attenuators 8a to 8f can control a degree of coupling between the internal mobile terminal 10 and each of the TRXa to TRXf of the BTS 2 (illustrated in Fig. 1). At any rate, a combination of the controller 9 and the switching controller 11 may serve to reproduce a softer handover of the active base transceiver station (BTS) 2 in a manner to be described later in detail and may be named a second circuit element.

As shown in Fig. 3, the first through the sixth pre-set attenuators 8a to 8f are connected to the multiplexer/demultiplexer (MUX/DEMUX) 12. The multiplexer/demultiplexer 12 serves to receive first through sixth attenuator output signals from the first through the sixth pre-set attenuators 7a to 7f to be combined into a combined signal and to deliver or distribute a mobile output signal from the internal mobile terminal 10 to the first through the sixth pre-set attenuators 7a to 7f. In this event, the first through the sixth atternuator output signals may be collectively called a down link radio signal from the BTS 2 towards the internal mobile terminal 10 and are controlled by the first through the sixth pre-set attenuators 7a to 7f. On the other hand, the mobile output signal may be called an up link radio signal from the internal mobile terminal 10 towards the BTS 2 and is divided by the multiplexer/demultiplexer 12 to be sent to the first through the sixth pre-set attenuators 7a to 7f as first through sixth attenuator input signals s 7a to 7f.

At any rate, the internal mobile terminal 10 can execute a call control test of the BTS 2 by sending the mobile output signal to the multiplexer/demultiplexer 12 and by receiving the down link radio signal from the multiplexer/demultiplexer 12.

Supplied with the control signal from the BTS 2, the controller 9 sends an internal control signal to the switching controller 11. Furthermore, the controller 9 carries out a call control operation by transmitting and receiving various call control signals to and from the internal mobile terminal 10.

In order to control the first through the sixth pre-set attenuators 8a to 8f, the controller 9 executes a selection control operation for selecting the pre-set attenuators 8a to 8f and an attenuation set operation for setting an attenuation value of each selected attenuator 8a to 8f. To this end, the internal control signal is sent from the controller 9 to the switching controller 11 to be distributed as the switching control signal to each pre-set attenuator 8a to 8f.

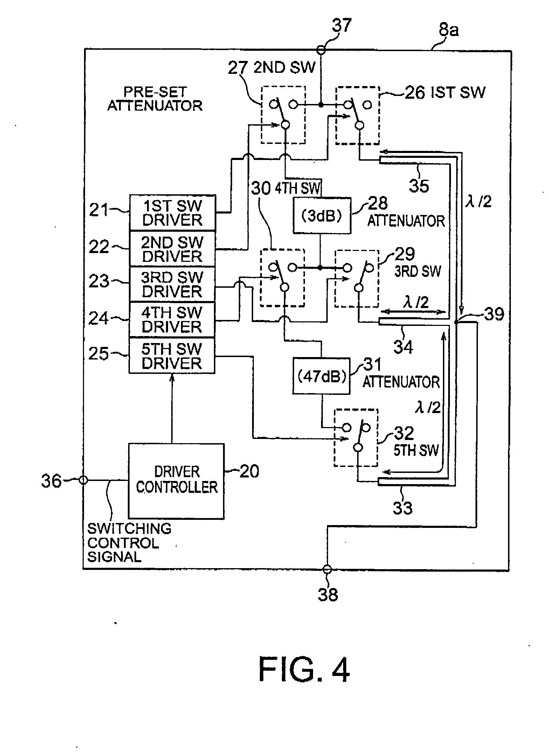

Referring to Fig. 4 together with Fig. 3, each of the first through the sixth pre-set attenuators 8a to 8f is similar in structure and operation and is therefore represented by the first pre-set attenuator 8a in Fig. 4. As shown in Fig. 4, the pre-set attenuator 8a has a first attenuator terminal 36 connected to the switching controller 11 (Fig. 3), a second attenuator terminal 37 connected to the antenna input/output terminal 7a (Fig. 3), and a third attenuator termninal 38 connected to the multiplexer/demultiplexer 12 (Fig. 3).

In Fig. 4, the illustrated pre-set attenuator 8a comprises first and second switches 26 and 27 that are connected to the second attenuator terminal 37 on one hand and that are connected to a λ/2 strip line 35 and a 3 dB attenuator unit 28, respectively, on the other hand. The 3 dB attenuator unit 28 is connected to the second switch 27 at one end, as mentioned above, and is also connected to third and fourth switches 29 and 30 at another end. The third switch 29 is connected to the third attenuator terminal 38 through a λ/2 strip line 34 while the fourth switch 30 is connected to a 47 dB attenuator unit 31 which is also connected to a fifth switch 32. The fifth switch 32 is connected to the third attenuator terminal 38 through a λ/2 strip line 33. In any event, the λ/2 strip line 35, the λ/2 strip line 34, and the λ/2 strip line 33 are connected in common to the third attenuator terminal 38 through an intersection point 39, as shown in Fig. 4, and have lengths adjusted to half wavelengths of pass band radio frequencies, respectively.

The first through the fifth switches 26, 27, 29, 30, and 32 are controlled by first through fifth switch drivers 21 to 24, respectively, that are connected to a driver controller 20. As shown in Fig. 4, the driver controller 20 is connected to the first attenuator terminal 36 and is supplied with the internal control signal from the controller 9 (Fig. 3) through the switching controller 11. The first through the fifth switch drivers 21 to 25 are selectively put into active states when they are selected by selection signals sent from the driver controller 20. In the illustrated example, the first through the fifth switch drivers 21 to 25 serve to execute on/off control operations of the first through the fifth switches 26, 27, 29, 30, and 32, respectively. As shown in Fig. 4, the λ/2 strip lines 25, 34, and 33 are connected through the first, the third, and the fifth switches 26, 29, and 32, the intersection point 39, and the third attenuator terminal 38.

With this structure, it is assumed that the first, the third, and the fifth switches 26, 29, and 32 are turned on under control of the first, the third, and the fifth switch drivers 21,23, and 25 and, as a result, are connected to the λ /2 strip lines 35, 34, and 33, respectively. In this case, pass band radio frequency signals are transmitted through the λ/2 strip lines 35, 34, and 33 and are combined together at the intersection point 39 to be sent through the third attenuator terminal 38 to the multiplexer/demultiplexer 12 (Fig. 3).

On the other hand, when the first, the third, and the fifth switches 26, 29, and 32 are tuned off and opened, the λ/2 strip lines 35, 34, and 33 are put into off states for the pass band radio frequencies and are disconnected from the first, the third, and the fifth switches 26, 29, and 32. In this situation, it is possible to suppress a variation of a radio characteristic.

Taking the above into consideration, the first, the third, and the fifth switch drivers 21 to 25 are controlled by the driver controller 20 so that a selected one of the first, the third, and the fifth switches 26, 29, and 32 alone is turned on with the remaining two switches are turned off to connect only one of the λ/2 strip lines 35, 34, and 33 to the third attenuator terminal 38 through the intersection point 39.

Specifically, when the first switch 26 is put into an on-state, both of the third and the fifth switches 29 and 32 are kept in off-state. As a result, the λ/2 strip lines 34 and 33 are opened with the λ/2 strip line 35 alone connected to the third attenuator terminal 38 through the intersection point 39. In this situation, an impedance characteristic seen from the intersection point 39 towards each of the third and the fifth switches 29 and 32 becomes infinitely great. Therefore, when the first switch 26 is turned on, it is possible to remove any influence of each of the third and the fifth switches 29 and 32.

Likewise, when the third switch 29 is turned on, the first and the fifth switches 26 and 32 are turned off so as to keep the λ/2 strip lines 35 and 33 open. Thus, the λ/2 strip lines 35 and 33 become open stubs. Under the circumstances, an impedance characteristic seen from the intersection point 39 towards each of the first and the fifth switches 26 and 32 becomes infinitely great and, as a result, no influence is given by the first and the fifth switches 26 and 32.

Similarly, when the fifth switch 32 is turned on, the first and the third switches 26 and 29 are turned off so as to separate the λ/2 strip lines 35 and 34 from the λ/2 strip line 33. An impedance characteristic seen from the intersection point 39 towards the λ/2 strip lines 35 and 34 becomes infinite. Thus, it is possible to remove any influence of the first and the second switches 26 and 29.

The illustrated pre-set attenuator 8a is operable in response to the switching control signal sent from the switching controller 11 (Fig. 3) through the first attenuator terminal 36. Supplied with the switching control signal, the pre-set attenuator 8a basically controls attenuation between the second and the third attenuator terminals 37 and 38 to set an attenuation value in an optimum call connection state, to set an attenuation value in a call start enable state, and to set an attenuation value in a call disconnection state.

As a specific example of the above-mentioned attenuation values, the attenuation in the optimum call connection state may be 0 dB while the attenuation in each of the call start enable state and the call disconnection state may be set to -3dB and -50 dB, respectively. The states of 0 dB and - 50 dB can be realized by putting the pre-set attenuator 8a into the on and off states and represent connection and disconnection states of the pre-set attenuator 8a, respectively.

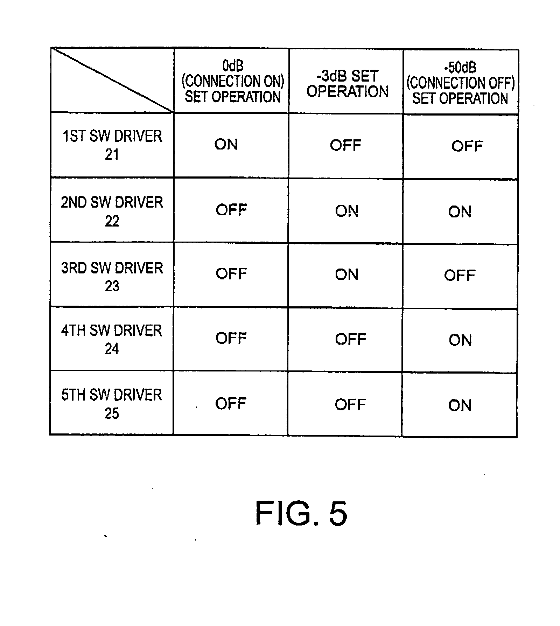

Referring to Fig. 5 along with Fig. 4, description will be made about 0 dB set operation, -3 dB set operation, and -50 dB set operation of the pre-set attenuator 8a (Fig. 4). As shown in Fig. 5, the above-mentioned operations of setting the attenuation can be realized by on/off control operations of the first through the fifth switch drivers 21 to 25.

When the 0 dB set operation, namely, the connection on set operation is carried out by the pre-set attenuator 8a, the first switch driver 21 supplies the first switch 26 with a drive signal to put the first switch 26 into the on state. Such a drive signal may be referred to as an on signal, as shown in Fig. 5. On the other hand, the second, the third, and the fifth switch drivers 22, 23, and 25 are kept off so as to put the second, the third, and the fifth switches 27, 29, and 32 into off states, respectively, as shown in Fig. 5. As a result, the second and the third attenuator terminals 37 and 38 are connected through the λ/2 strip line 35 and the first switch 26 alone without any attenuator units, such as 28 and 31. The 0 dB set operation may be named a first test.

Now, the -3 dB set operation is carried out in the manner tabulated in Fig. 5. In this event, the -3 dB attenuator unit 28 is connected between the second and the third attenuator terminals 37 and 38. Specifically, the second and the third switch drivers 22 and 23 sends the drive signal to the second and the third switches 27 and 29 to put them into the on states, respectively, as exemplified in Fig. 5, on the -3 dB set operation. In consequence, the second and the third attenuator terminals 37 and 38 are connected through the λ/2 strip line 34, the third switch 29, the -3dB attenuator unit 28, and the second switch 27. Thus, -3dB attenuation is accomplished by the -3 dB set operation that will be called a second test.

Furthermore, the -50 dB set operation is carried out in a manner as exemplified in Fig.5, so as to accomplish -50 dB attenuation between the second and the third attenuator terminals 37 and 38. To this end, both the - 3dB attenuator unit 28 and the -47 dB attenuator unit 31 are connected between the second and the third attenuator terminals 37 and 38. Specifically, the second, the fourth, and the fifth switches 27, 30, and 32 are turned on in response to the drive signal sent from the second, the fourth, and the fifth switch drivers 22, 24, and 25, as tabulated in Fig. 5. Thus, the -50 dB set operation serves to provide attenuation of -50 dB and may be called a third test.

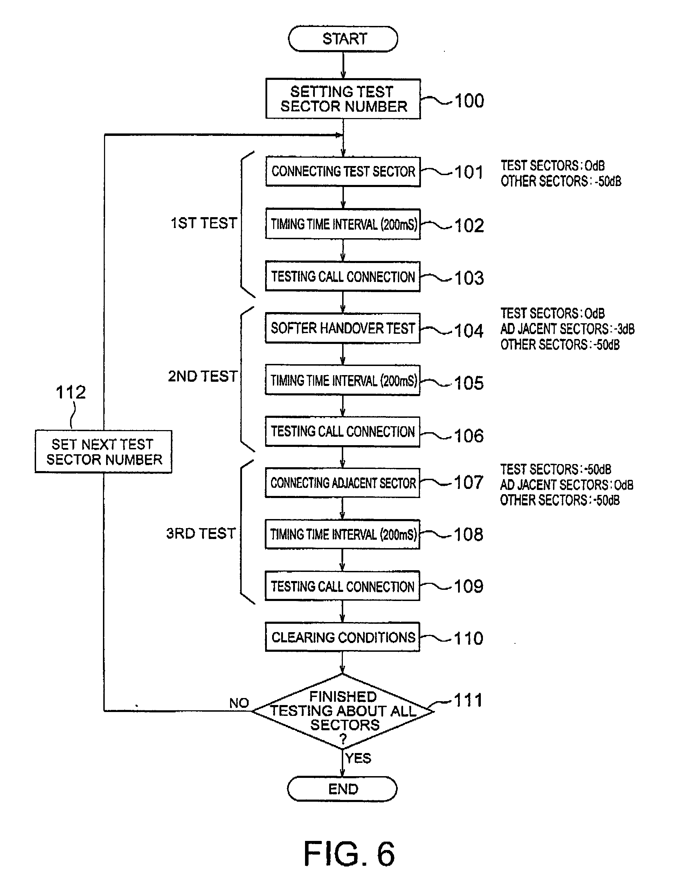

Referring to Fig. 6, description will be made about a softer handover test that is carried out by the use of the base testing apparatus 1 illustrated in Figs. 2 through 5. In Fig. 6, a test sector number is determined at a step 100 by the controller 9 (Fig. 2) indicated by the BTS 2. In the illustrated example, either one of the first through the sixth sectors is set by the controller 9 (Fig. 3) as the test sector number assigned to the determined sector. The test sector number is sent from the controller 9 as the internal control signal to the switching controller 11 to be delivered as the switching control signals to the first through the sixth pre-set attenuators 8a to 8f (Fig. 3). In this case, the pre-set attenuator indicated by the test sector number may be referred to as a test pre-set attenuator and is set into the connection state while the other pre-set attenuators are left into the disconnection states. In other words, the test sector is given 0 dB while the remaining sectors are given -50 dB. Thus, the test sector and the corresponding pre-set attenuator are put into the connection state while the other or remaining sectors and the corresponding pre-set attenuators are put into the disconnection states, as shown at a step 101. Specifically, the pre-set attenuator of the test sector is controlled by the switching controller 11 to carry out the 0 dB set operation, as mentioned in conjunction with Figs. 4 and 5 while the other pre-set attenuators are put into the disconnection states by providing the -50 dB attenuation in the manner described with reference to Figs. 4 and 5.

In this situation, a time interval of 200ms is timed by the controller 9 at a step 102. In this case, the call connection is executed between the internal mobile terminal 10 of the base testing apparatus 1 and the TRX of the BTS 2 corresponding to the test sector to test whether or not the test sector is normal (step 103). As a result, it is confirmed whether or not the test sector is normally connected. The operation of the steps 101 to 103 correspond to the first test mentioned above. In other words, the first test is at first executed at the steps 101 to 103.

The step 103 is followed by a step 104 at which a softer handover connection is executed with the test sector unchanged. In order to execute the softer handover connection and a softer handover test, not only the test sector but also its neighboring or adjacent sector should be considered. Taking this into consideration, the pre-set attenuator of the adjacent sector is set or changed from -50 dB attenuation to -3dB attenuation while the pre-set attenuation of the test sector is kept in the connection state of 0dB. The remaining pre-set attenuators of the other sectors are kept in the disconnection state of -50dB, as shown at a step 104 in Fig. 6. Thus, the softer handover connections are established at the step 104 by setting the pre-set attenuators of the test and the adjacent sectors to the above-mentioned situations. In these situations, the internal mobile terminal 10 of the base testing apparatus 1 automatically establishes two radio paths between the internal mobile terminal 10 and the test sector TRX and between the internal mobile terminal 10 and the adjacent sector TRX.

Thereafter, a time interval of 200ms is timed at a step 105 that is followed by a step 106. At the step 106, the call connection is tested so as to make sure of whether or not the call connection is normally kept without interruption through two radio paths between the internal mobile terminal 10 and the test sector TRX and between the internal mobile terminal 10 and the adjacent sector TRX. In other words, the second test is executed at the steps 104 to 106.

Next, the pre-set attenuator of the test sector is switched from 0 dB to -50dB in a manner as mentioned with reference to Fig. 4 and put into the disconnection state or off state. On the other hand, the pre-set attenuator of the adjacent sector is set from -3dB to 0dB to be put into the connection state or on state while the other pre-set attenuators of the other sectors are kept at - 50dB and put into the disconnection state. Under the circumstances, the radio path between the internal mobile station 10 and the test sector TRX of the BTS 2 is disconnected while only the radio path between the internal mobile station 10 and the adjacent sector TRX is kept connected. Thereafter, a time interval of 200ms is timed at a step 108 like the steps 102 and 105. In this state, the connection between the internal mobile terminal 10 and the adjacent sector TRX of the BTS 2 is checked at a step 109 about whether or not the call connection is kept normal without any interruption. Thus, the steps 107 to 109 serve to execute the third test.

In the above-mentioned manner, the softer handover test is finished in connection with a single test sector. Thereafter, test conditions set in the base testing apparatus 1 and the BTS 2 are cleared at a step 110 in order to continue the softer handover test in a similar manner. Subsequently, it is judged at a step 111 whether or not the softer handover test is finished about all of the sectors. If any other test sectors are left without being tested, a next following test sector number is set at a step 112 to be returned back to the step 101. Otherwise, the softer handover test is completed.

Herein, it is to be noted that the steps illustrated in Fig. 6 are executed under control of the controller 9 (Fig. 3) cooperating with the active BTS 2. At any rate, the above-mentioned base testing apparatus 1 serves to test an actual softer handover in cooperation with the active BTS 2.

In addition, the time interval of 200ms are timed at the steps 102, 105, and 108. Such a time interval is helpful to maintain a sufficient movement time and a suitable power control time for the softer handover operation and, as a result, to stabilize the operation of the BTS 2. It is noted that such movement time and power control times are varied in dependency upon a variation of the radio paths.

As mentioned before, the base testing apparatus according to this invention has a plurality of pre-set attenuators which are controllable and each of which is placed between the internal mobile terminal and each TRX correponding to each sector. Each pre-set attenuator is varied in attenuation among three attenuation values, namely, 0 dB, -3 dB, and -50 dB. In this event, the attenuation value of 0 dB defines an optimum connection state while the attenuation values of -3dB and -50dB define a call start enable state and a call disconnection state, respectively. With this structure, the softer handover test is executed by simulating the softer handover state by the use of the three kinds of attenuation values.

In addition, this invention is advantageous in that a stable softer handover test is executed by setting the sufficient time interval when the radio paths are changed from one to two or from two to one.

While this invention has thus far been described in conjunction with a preferred embodiment thereof, it will be readily possible for those skilled in the art to put this invention into practice in various other manners. For example, each of the pre-set attenuators may be varied among four or more kinds of attenuation values. The sector number may not be restricted to three or six. In addition, each pre-set attenuator may include a wide variety of attenuator units besides the -3 dB attenuator unit and the -47 dB attenuator unit. For example, a -50 dB attenuator unit may be used instead of the -47 dB attenuator unit.

## Claims

1. A base testing apparatus for use in a CDMA communication system in combination with an active base transceiver station that has a plurality of sector transceivers corresponding to a plurality of sectors in a service area, respectively, the base station testing apparatus having an internal mobile terminal placed therein and comprising:
first means for individually adjusting degrees of coupling between the internal mobile terminal and each of the transceivers, respectively; and
second means, coupled to the first means, for reproducing a softer handover test of the sector transceivers between two adjacent ones of the sectors by controlling the degrees of coupling between the internal mobile terminal and each sector transceiver through the first means.

2. A base testing apparatus as claimed in claim 1, wherein the degrees of coupling are defined by attenuation values and the first means comprises:
a plurality of pre-set attenuators which are made to correspond to the transceivers in the BTS and each of which provides at least three attenuation values different from one another.

3. A base testing apparatus as claimed in claim 2, wherein each of the pre-set attenuators provides, as at least three attenuation values, a first attenuation value, a second attenuation value smaller than the first attenuation value, and a third attenuation value smaller than the second attenuation value.

4. A base testing apparatus as claimed in claim 3, wherein the first attenuation value gives an optimum call connection state between the internal mobile terminal and the sector transceiver of the corresponding sector while the second and the third attenuation values give a call connection start enable state between the internal mobile terminal and the sector transceiver of the corresponding sector and a call disconnection state between the internal mobile terminal and the sector transceiver of the corresponding sector, respectively.

5. A base testing apparatus as claimed in claim 4, wherein the first, the second, and the third attenuation values are equal to 0 dB, -3 dB, and -50 dB, respectively.

6. Abase testing apparatus as claimed in claim 4, wherein each of the pre-set attenuators comprises:
a first attenuator terminal given a switching control signal from the second means;
a second attenuator terminal connected to the sector transceiver of the corresponding sector;
a third attenuator terminal coupled to the internal mobile terminal;
a plurality of attenuator units having attenuation values different from each other;
a plurality of switches for selectively connecting the attenuator units between the second and the third attenuator terminals in response to drive signals to provide the first, the second, and the third attenuation values; and
a drive control circuit for controlling on/off control of the respective switches in response to the switching control signal sent through the first attenuator terminal.

7. A base testing apparatus as claimed in claim 6, wherein the attenuator units are equal in number to two and provides the attenuation values of -3 dB and -47 dB, respectively.

8. A base testing apparatus as claimed in claim 6, wherein each of the pre-set attenuators further comprises:
a plurality of λ/2 strip lines which are connected in common to an intersection point connected to the third attenuation terminal and which are also connected to the switches for selectively connecting the λ/2 strip lines to the second attenuation terminal through the attenuation units selected.

9. A base testing apparatus as claimed in claim 8, wherein the attenuator units are equal in number to two and provides the attenuation values of -3 dB and -47 dB, respectively;
the switches being arranged so that the two attenuation units are not connected between the second and the third attenuator terminals when the first attenuation value is provided while the attenuation unit of -3 dB and both the attenuation units of -3 dB and -47 dB are connected between the second and the third terminals when the second and the third attenuator values are provided, respectively.

10. An apparatus as claimed in any one of claims 1 to 9, wherein the second means comprises:
setting means for setting a sector number assigned to each sector to indicate a sector;
control means for controlling the degrees of coupling in the first means to reproduce the softer handover test so that the degrees of coupling are selected from a first degree of coupling between the internal mobile terminal and the sector transceiver of the indicated sector, a second degree of coupling between the internal mobile terminal and an adjacent sector transceiver of an adjacent sector to the indicated sector, and a third degree of coupling between the internal mobile terminal and the remaining sector transmitters.

11. Abase testing apparatus as claimed in claim 10, wherein the degrees of coupling are defined by attenuation values and the first degree of coupling is defined by a first attenuation value while the second degree is defined by a second attenuation value smaller than the first attenuation value and the third degree is defined by a third attenuation value smaller than the second attenuation value.

12. A base testing apparatus as claimed in claim 11, wherein the second means further reproduces the softer handover test by executing a call connection test between two radio paths between the internal mobile terminal and the indicated sector and between the internal mobile terminal and the adjacent sector.

13. Abase testing apparatus as claimed in claim 12, wherein the radio path between the internal mobile terminal and the indicated sector transceiver is kept at the first attenuation value while the other radio path between the internal mobile terminal and the adjacent sector transceiver is kept at the second attenuation value and the remaining radio paths are kept at the third attenuation value.

14. A base testing apparatus as claimed in claim 13, wherein the second means further executes another call connection test of the radio path between the internal mobile terminal and the indicated sector transceiver before the call connection test of the two radio paths and a further call connection test of another radio path between the internal mobile path and the adjacent sector transceiver after the call connection test of the two radio paths.

15. Abase testing apparatus as claimed in claim 14, wherein each of the call connection test of the radio path or the radio paths monitors a power control time interval in consideration of the softer handover operation.

16. A method of testing an active base transceiver station (BTS) used in a CDMA communication system, the active base transceiver station having a plurality of sector transceivers corresponding to a plurality of sectors in a service area, respectively, the method being executed by the use of an internal mobile terminal and comprising the steps of:
individually adjusting degrees of coupling between the internal mobile terminal and each of the transceivers, respectively; and
reproducing a softer handover test of the sector transceivers between two adjacent ones of the sectors by controlling the degrees of coupling between the internal mobile terminal and each sector transceiver through the first means.

17. A method as claimed in claim 16, wherein the degrees of coupling are defined by attenuation values and the adjusting step comprises the step of:
using a plurality of pre-set attenuators which are made to correspond to the transceivers in the BTS and each of which provides at least three attenuation values different from one another.

18. A method as claimed in claim 17, wherein each of the pre-set attenuators provides, as at least three attenuation values, a first attenuation value, a second attenuation value smaller than the first attenuation value, and a third attenuation value smaller than the second attenuation value.

19. A method as claimed in claim 18, wherein the adjusting step comprises the steps of:
giving the first attenuation value in an optimum call connection state between the internal mobile terminal and the sector transceiver of the corresponding sector; and
giving the second and the third attenuation values in a call connection start enable state between the internal mobile terminal and the sector transceiver of the corresponding sector and in a call disconnection state between the internal mobile terminal and the sector transceiver of the corresponding sector, respectively.

20. A method as claimed in claim 19, wherein the first, the second, and the third attenuation values are equal to 0 dB, -3 dB, and -50 dB, respectively.

21. A method as claimed in claim 19, wherein each of the pre-set attenuators comprises:
a first attenuator terminal given a switching control signal from the second means;
a second attenuator terminal connected to the sector transceiver of the corresponding sector;
a third attenuator terminal coupled to the internal mobile terminal;
a plurality of attenuator units having attenuation values different from each other;
a plurality of switches for selectively connecting the attenuator units between the second and the third attenuator terminals in response to drive signals to provide the first, the second, and the third attenuation values; and
a drive control circuit for controlling on/off control of the respective switches in response to the switching control signal sent through the first attenuator terminal.

22. A method as claimed in claim 21, wherein the attenuator units are equal in number to two and provides the attenuation values of -3 dB and - 47 dB, respectively.

23. A method as claimed in claim 21 or 22, wherein each of the pre-set attenuators further comprises:
a plurality of λ/2 strip lines which are connected in common to an intersection point connected to the third attenuation terminal and which are also connected to the switches for selectively connecting the λ/2 strip lines to the second attenuation terminal through the attenuation units selected.

24. A method as claimed in claim 23, wherein the attenuator units are equal in number to two and provides the attenuation values of -3 dB and - 47 dB, respectively;
the switches being operated in the adjusting step so that the two attenuation units are not connected between the second and the third attenuator terminals when the first attenuation value is provided while the attenuation unit of -3 dB and both the attenuation units of -3 dB and -47 dB are connected between the second and the third terminals when the second and the third attenuator values are provided, respectively.

25. A method as claimed in any one of claims 16 to 24, wherein the reproducing step comprises the steps of:
setting a sector number assigned to each sector to indicate a sector; and
controlling the degrees of coupling in the first means to reproduce the softer handover test so that the degrees of coupling are selected from a first degree of coupling between the internal mobile terminal and the sector transceiver of the indicated sector, a second degree of coupling between the internal mobile terminal and an adjacent sector transceiver of an adjacent sector to the indicated sector, and a third degree of coupling between the internal mobile terminal and the remaining sector transmitters.

26. A method as claimed in claim 25, wherein the degrees of coupling are defined by attenuation values and the first degree of coupling is defined by a first attenuation value while the second degree is defined by a second attenuation value smaller than the first attenuation value and the third degree is defined by a third attenuation value smaller than the second attenuation value.

27. A method as claimed in claim 26, wherein the reproducing step comprises the step of:
executing a call connection test between two radio paths between the internal mobile terminal and the indicated sector and between the internal mobile terminal and the adjacent sector.

28. A method as claimed in claim 27, wherein the executing step comprises the steps of:
keeping the radio path between the internal mobile terminal and the indicated sector transceiver at the first attenuation value;
keeping the other radio path between the internal mobile terminal and the adjacent sector transceiver at the second attenuation value; and
keeping the remaining radio paths at the third attenuation value.

29. A method as claimed in claim 28, wherein the reproducing step comprises the steps of;
executing another call connection test of the radio path between the internal mobile terminal and the indicated sector transceiver before the call connection test of the two radio paths; and
executing a further call connection test of another radio path between the internal mobile path and the adjacent sector transceiver after the call connection test of the two radio paths.

30. A base testing apparatus as claimed in claim 29, wherein each of the call connection test of the radio path or the radio paths monitors a power control time interval in consideration of the softer handover operation.
